(19) Europäisches Patentamt
European Patent Office
Office européen des brevets

(11) **EP 1 391 053 B1**

(12) **EUROPÄISCHE PATENTSCHRIFT**

(45) Veröffentlichungstag und Bekanntmachung des Hinweises auf die Patenterteilung:
**12.10.2005 Patentblatt 2005/41**

(21) Anmeldenummer: 02771638.0

(22) Anmeldetag: **08.05.2002**

(51) Int Cl.$^7$: **H04B 1/707**

(86) Internationale Anmeldenummer:
**PCT/EP2002/005115**

(87) Internationale Veröffentlichungsnummer:
**WO 2002/095971 (28.11.2002 Gazette 2002/48)**

(54) **EMPFANGSEINRICHTUNG FÜR EIN CDMA-NACHRICHTENÜBERTRAGUNGSSYSTEM, SOWIE ADAPTIVES CDMA-INTERFERENZUNTERDÜCKUNGSVERFAHREN**

RECEIVER DEVICE FOR A CDMA MESSAGE TRANSMISSION SYSTEM AND ADAPTIVE CDMA INTERFERENCE SUPPRESSION METHOD

DISPOSITIF DE RECEPTION POUR SYSTEME DE TRANSMISSION DE MESSAGES AMRC, ET PROCEDE ADAPTATIF D'ELIMINATION D'INTERFERENCES AMRC

(84) Benannte Vertragsstaaten:
**DE FR GB**

(30) Priorität: **18.05.2001 EP 01112282**
**18.05.2001 DE 10124416**

(43) Veröffentlichungstag der Anmeldung:
**25.02.2004 Patentblatt 2004/09**

(73) Patentinhaber: **SIEMENS AKTIENGESELLSCHAFT**
**80333 München (DE)**

(72) Erfinder:
• **SEEGER, Alexander**
**85622 Feldkirchen (DE)**
• **VOGL, Ulrich**
**92263 Ebermannsdorf (DE)**

(56) Entgegenhaltungen:
**EP-A- 0 893 888     DE-A- 19 815 825**
**FR-A- 2 797 726     US-A- 5 305 349**

**Beschreibung**

Die Erfindung betrifft Empfangseinrichtungen für CDMA-Nachrichtenübertragungssysteme gemäß dem Oberbegriff des Anspruchs 1 sowie ein adaptives CDMA-Interferenzunterdrückungsverfahren gemäß dem Oberbegriff des Anspruchs 5.

Bei der Übertragung von Nachrichten von einem Sender, z.B. einem Mobilfunk-Endgerät, an einen Empfänger, z.B. eine Mobilfunk-Basisstation hängt die über einen bestimmten Kanal übertragbare Nachrichtenmenge von der verfügbaren Bandbreite, von der verfügbaren Übertragungszeit und vom Störabstand ab. Soll ein Kanal von mehreren Sendern gleichzeitig genutzt werden, kann z.B. die verfügbare Bandbreite auf die verschiedenen Sender aufgeteilt werden ("FDMA" = frequency division multiple access). Alternativ oder zusätzlich können jedem Sender jeweils bestimmte Zeitfenster auf der Zeitachse zugeordnet sein ("TDMA" = time division multiple access). Demgegenüber nutzen bei CDMA-Verfahren ("CDMA" = code division multiple access) alle Sender fortdauernd das gesamte Frequenzband. Die Trennung zwischen den Signalen einzelner Sender kann z.B. durch unterschiedliche Codes erfolgen.

Bei W-CDMA-Mobilfunksystemen ("W-CDMA" = wideband code division multiple access), beispielsweise bei UMTS-Mobilfunksystemen, kommuniziert eine Basisstation mit einer Vielzahl von mobilen Endgeräten, die sich (momentan) in einer der Basisstation zugeordneten Zelle befinden. Zum Senden von Informationen von den Endgeräten zur Basisstation (Kommunikation in "uplink"-Richtung) werden sog. Spreizcodes verwendet ("spreading codes"). Ein einzelnes zu übertragendes Datenbit wird mit Hilfe des jeweiligen Spreizcodes zu einer Chipfolge aufgespreizt. Da die verwendeten Spreizcodes zueinander nicht orthogonal sind, kommt es zu Interferenzen, z.B. zu Interferenzen mit von Endgeräten anderer Zellen ausgesendeten Signalen ("inter cell interference"), sowie zu Interferenzen zwischen den Signalen der einer bestimmten Zelle zugeordneten Endgeräten ("intra cell interference"). Hierbei kann es sich um Interferenzen eines von einem bestimmten Endgerät ausgesendeten Signals mit den von anderen Endgeräten der gleichen Basisstation ausgesendeten Signalen handeln ("multi user interference"), oder um Interferenzen zwischen von einem bestimmten Endgerät ausgesendeten, jedoch verschiedenen Datenbits zugeordneten Signalen ("inter symbol interference"). Auch orthogonale Sequenzen können aufgrund von Laufzeitunterschieden deorthogonalisiert werden, so dass auch bei orthogonalen Sequenzen Interferenzen auftreten können.

Im Stand der Technik sind Verfahren bekannt, mit denen Interferenzen zwischen den einer bestimmten Zelle zugeordneten mobilen Endgeräten unterdrückt werden können. Beispielsweise wird bei der seriellen Interferenzunterdrückung ("serial interference cancellation") zunächst in einer ersten Stufe in der Basisstation das von dem am stärksten empfangenen Endgerät stammende Datenbit-Signal ermittelt. Dann wird durch Re-Modulation die Interferenz mit den anderen Endgeräten geschätzt, und das Interferenz-Schätzsignal von den von den Endgeräten empfangenen Signalen subtrahiert. In einer zweiten Stufe wird das von dem zweitstärksten Endgerät stammende Datenbit-Signal ermittelt, und das durch Re-Modulation gewonnene Interferenz-Schätzsignal von den von den Endgeräten empfangenen Signalen subtrahiert, usw. Ein Nachteil hierbei ist unter anderem, dass die erforderlichen Signal-Remodulationen zu einem hohen Schaltungsaufwand führen. Außerdem wirken sich in den ersten Stufen gemachte Schätzfehler nachteilig auf die Bitfehlerquoten sämtlicher nachfolgender Stufen aus.

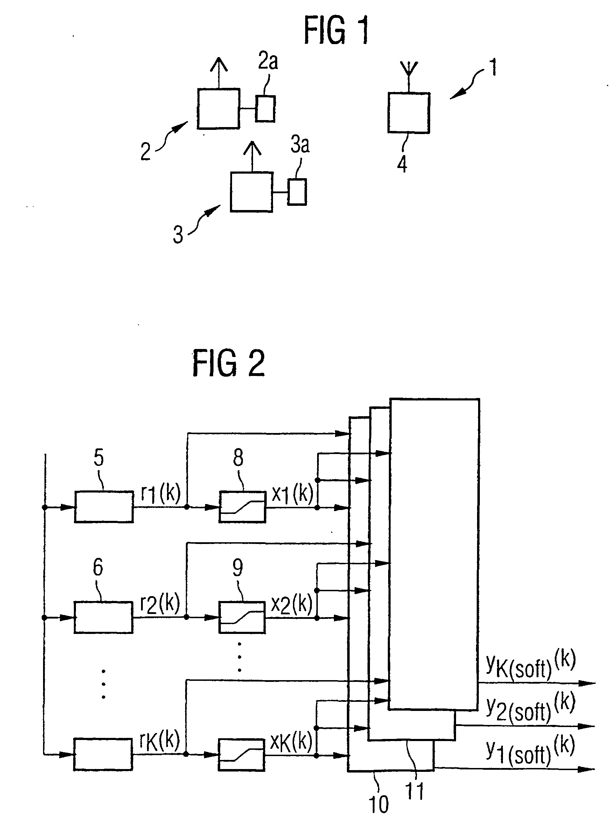

In EP 0 984 576 ist ein RAKE-Receiver für eine sogenannte "direct spreading CDMA transmission" beschrieben. Dabei gelangt gemäß FIG1 ein gespreiztes moduliertes Basisbandsignal als Eingangssignal an ein "matched filter", mit dessen Hilfe das Eingangssignal entspreizt wird. Ein Ausgangssignal des "matched filters" gelangt an mehrere parallel zueinander angeordnete "multipliers" und von diesen über nachgeschaltete und parallel zueinander angeordnete Demodulatoren an einen "adder", mit dessen Hilfe ein Rake-Combining durchgeführt wird. Ausgangsseitig ist der "adder" mit einer "data decision section" und mit einer "error-signal section" verbunden, mit deren Hilfe unter Benutzung eines "weighting factor controller" Wichtungsfaktoren für die "multiplier" erzeugt werden.

In FR 2 797 726 ist ein Empfang eines CDMA-Signals und dessen weitere Verarbeitung beschrieben. Aus EP 0 893 888 ist ein Rake-Receiver zur Spread-Spectrum-Communication bekannt und in US 5,305,349 wird ein quantisierter kohärenter RAKE-Receiver beschrieben. In DE 198 15 825 ist ein analoger Entzerrer und Decoder für verzerrende Nachrichtenübertragüngskanäle beschrieben..

Die Erfindung hat zur Aufgabe, neuartige adaptive CDMA-Interferenzunterdrückungsverfahren, sowie neuartige Empfangseinrichtungen für CDMA-Nachrichtenübertragungssysteme zur Verfügung zu stellen.

Diese Aufgabe wird, bezogen auf eine Empfangseinrichtung, durch die Merkmale des Anspruchs 1 und, bezogen auf ein CDMA-Interferenzünterdrückungsverfahren, durch die Merkmale des Anspruchs 5 gelöst. Vorteilhafte Weiterbildungen der Erfindung sind in den jeweiligen Unteransprüchen angegeben.

Eine erfindungsgemäße Empfangseinrichtung weist einen Rake-Empfänger auf, welcher aus von mehreren verschiedenen Sendeeinheiten gemeinsam empfangenen Signalen ein einer bestimmten Sendeeinheit zugeordnetes Signal herausfiltert, eine adaptive Interferenzunterdrückungseinrichtung, welche in dem herausgefilterten Signal enthaltene Interferenzen unterdrückt, und eine Koeffizientenaktualisiereinrichtung, die Filterkoeffizienten berechnet, die zur Interferenzunterdrückung verwendet werden, wobei die Interferenzunterdrückungseinrichtung eine Mehrphasenstruktur aufweist, und wobei die zur Interferenzunterdrückung verwendeten Filterkoeffizienten in Abhängigkeit von der momentanen Phase gewählt werden, in der sich die Interferenzunterdrückungseinrichtung befindet.

Insbesondere zur Unterdrückung von "multi user"-Interferenzen weist die Empfangseinrichtung für ein CDMA-Nachrichtenübertragungssystem einen ersten Rake-Empfänger auf, welcher aus von mehreren verschiedenen Sendeeinheiten gemeinsam empfangenen Signalen ein einer ersten Sendeeinheit zugeordnetes Signal herausfiltert, einen zweiten Rake-Empfänger, welcher aus den von den mehreren verschiedenen Sendeeinheiten gemeinsam empfangenen Signalen ein einer zweiten Sendeeinheit zugeordnetes Signal herausfiltert, und eine adaptive Interferenzunterdrückungseinrichtung, welche in dem der ersten Sendeeinheit zugeordneten, herausgefilterten Signal enthaltene Interferenzen unterdrückt, wobei der Interferenzunterdrückungseinrichtung eine "soft-bit" Entscheidungseinrichtung vorgeschaltet ist, welcher als Eingabesignal das der zweiten Sendeeinheit zugeordnete, herausgefilterte Signal zugeführt wird, und deren Ausgabesignal zur Berechnung von in dem der ersten Sendeeinheit zugeordneten, herausgefilterten Signal enthaltenen Interferenzen verwendet wird.

Bei Verwendung einer "soft bit" Entscheidungseinrichtung wird das z.B. im Zahlenbereich zwischen $+\infty$ und $-\infty$ liegende herausgefilterte Signal nicht wie bei "hard bit" Entscheidungseinrichtungen genau z. B. entweder auf die Zahl $+1$ oder auf die Zahl $-1$ abgebildet, sondern auf einen z.B. zwischen den Zahlen $+1$ und $-1$ liegenden Zahlenbereich. Wie in Simulationen gezeigt wurde, kann durch den Einsatz von "soft bits" die Bitfehlerrate in CDMA-Nachrichtenübertragungssystemen verringert werden. Vorteilhaft werden die von der Entscheidungseinrichtung gelieferten "soft bits" auf Bit- bzw. Symbolebene, d.h. nach dem Entspreizen verwendet.

Insbesondere zur Unterdrückung von "inter symbol"-Interferenzen wird eine Empfangseinrichtung für ein CDMA-Nachrichtenübertragungssystem zur Verfügung gestellt, welche einen Rake-Empfänger aufweist, welcher aus von mehreren verschiedenen Sendeeinheiten gemeinsam empfangenen Signalen ein einer bestimmten Sendeeinheit zugeordnetes Signal herausfiltert, und eine adaptive Interferenzunterdrückungseinrichtung, welche die in dem herausgefilterten Signal enthaltene Interferenzen unterdrückt, wobei der Interferenzunterdrückungseinrichtung eine "soft-bit" Entscheidungseinrichtung vorgeschaltet ist, welcher als Eingabesignal das herausgefilterte Signal zugeführt wird, und deren Ausgabesignal zur Berechnung von in dem herausgefilterten Signal enthaltenen Interferenzen verwendet wird.

Im folgenden wird die Erfindung anhand eines Ausführungsbeispiels und der beigefügten Zeichnung näher erläutert. In der Zeichnung zeigt:

Figur 1 eine schematische Darstellung eines W-CDMA- Mobilfunkübertragungssystems;

Figur 2 eine schematische Darstellung eines Abschnitts der in Fig. 1 gezeigten Empfangseinheit mit einer In- terferenzunterdrückungseinrichtung gemäß der vor- liegenden Erfindung; und

Figur 3 eine schematische Darstellung eines Abschnitts der in Fig. 1 gezeigten Empfangseinheit mit mehreren Interferenzunterdrükkungseinrichtungen.

Figur 1 zeigt eine schematische Darstellung eines W-CDMA Mobilfunkübertragungssystems 1. Dieses weist eine erste Sendeeinheit 2, hier: ein erstes Mobilfunkgerät, eine zweite Sendeeinheit 3, hier: ein zweites Mobilfunkgerät, eine Empfangseinheit 4, hier: eine Basisstation, sowie eine Anzahl (K-2) weiterer, hier nicht dargestellter Sendeeinheiten auf.

Ein von einer bestimmten Sendeeinheit 2 zu übertragendes Datenbit d wird zunächst mit Hilfe eines Spreizcodes C, der in einer der Sendeeinheit 2 zugeordneten Speichervorrichtung 2a abgespeichert ist, zu einer Bitfolge aufgespreizt. Die erhaltene Bitfolge wird mit Hilfe eines ebenfalls in der Speichervorrichtung 2a abgespeicherten Pseudo-Zufallscodes S verwürfelt, und die so erhaltene Bitfolge dann zur Empfangseinheit 4 übertragen.

Das in der Empfangseinheit 4 von einer bestimmten Sendeeinheit 2 empfangene Signal e kann somit durch die folgende Gleichung beschrieben werden:

$$(1) \qquad e = HSCd + noise$$

Dabei stellt die Matrix $A = HSC$ die die Spreizung, die Verwürfelung, und die Faltung durch die Übertragung (Übertragungsmatrix H) berücksichtigende, effektive Systemmatrix dar, und d den Vektor der Datensymbole. Aufgrund der periodischzeitvarianten Struktur des Pseudozufallscodes S ändert sich die Systemmatrix A ebenfalls periodisch.

Das von der Empfangseinheit 4 von sämtlichen K Sendeeinheiten 2, 3 insgesamt empfangene Signal genügt somit der folgenden Gleichung:

$$(2) \qquad e_{A11} = \sum A_u d_u + noise$$

Gemäß Fig. 2 weist die Empfangseinheit 4 für jede der ihr zugeordneten K Sendeeinheiten 2, 3 einen herkömmlichen Rake-Empfänger 5, 6, eine Entscheidungseinrichtung 8, 9, und eine Interferenzunterdrückungseinrichtung 10, 11 auf. Jedem Rake-Empfänger 5, 6 wird das von der Empfangseinheit 4 empfangene Gesamtsignal zugeführt. Der jeweilige Rake-Empfänger 5, 6 führt dann auf herkömmliche Weise eine auf die ihm jeweils zugeordnete Sendeeinheit 2, 3 abgestimmte Filterung des Gesamtsignals durch. Die Ausgabe des u-ten Rake-Empfängers 5, 6 kann dann durch die folgende Gleichung beschrieben werden:

$$(3) \qquad r_u = \sum A^T u \, A_{u'} d_{u'} + noise$$

Dabei stellt die Matrix $A^T_u$ die Transponierte der für die jeweilige Sendeeinheit 2, 3 geltenden Systemmatrix dar. Die Matrix $B_{uu'} = A^T_u A_{u'}$ beschreibt - für u' ungleich u - die "multi user interference", und - für u' gleich u - die "inter symbol interference". Die Interferenzmatrix $B_{uu'}$ weist ebenfalls eine periodisch-zeitvariante Struktur mit einer Periode von 1 = p/Q auf, wobei p die Periode des Pseudo-Zufallscodes S, und Q der Spreizfaktor des Spreizcodes C ist.

Die periodisch-zeitvariante Struktur wird z.B. im Fall von W-CDMA durch die Kombination von Spreizcode (typ. Länge 4 bis 128 chips) und Scramblingcode (Länge 256 chips bei einem short scrambling code oder 38400 chips bei einem long scrambling code) bedingt, wobei ein effektiver Spreizcode durch Kombination von Spreizcode und Scramblingcode entsteht.

Bei einem "short-scrambling-code" der Länge 256 chips und bei einem Spreizcode mit Spreizfaktor 64 gliedert sich die Länge von 256 chips beispielsweise in 4 Abschnitte zu je 64 chips, wobei jeder Abschnitt einem Datensymbol entspricht. Für jedes Symbol in diesen 4 Abschnitten gilt damit ein anderer effektiver Spreizcode. Erst mit einer folgenden Periode von 256 chips wiederholt sich der effektive Spreizcode wieder, wodurch eine periodische Struktur entsteht.

Von diesem effektiven Spreizcode sind auch Kreuzkorrelationseigenschaften zwischen einzelnen Teilnehmersignalen (Usersignalen) auf Symbolebene abhängig, weshalb auch für diese Kreuzkorrelationseigenschaften eine entsprechende Periodizität gilt.

Zu beachten ist, dass bei einem konstanten physikalische Kanal innerhalb einer Periode stark unterschiedliche Kreuzkorrelationen auftreten. Es ist daher nicht möglich, diesen durch ein adaptives Filter zu folgen. Jedoch ist demgegenüber beim konstanten physikalischen Kanal die Kreuzkorrelation für den gleichen Abschnitt in zwei aufeinanderfolgenden Perioden gleich. Eine adaptive Interferenzunterdrückungseinrichtung, die Vorwissen über diese Periodizität nutzt, kann somit effektiv mit mehreren Koeffizientensätzen arbeiten, wobei ein Koeffizientensatz immer für einen Abschnitt innerhalb einer Periode gilt. Dieser Koeffizientensatz wird nur aus Kanalwerten innerhalb dieses Abschnitts und dem entsprechenden Speicherinhalt für diesen Abschnitt bestimmt. Für den nächsten Abschnitt wird auf einen anderen Koeffizientensatz umgeschaltet. Erst im äquivalenten Abschnitt der nächsten Periode wird die Anpassung der Filterkoeffizienten fortgesetzt.

Wie in Fig. 2 gezeigt ist, wird die Ausgabe jedes Rake-Empfängers 5, 6 dann der dem jeweiligen Rake-Empfänger 5, 6 zugeordneten Entscheidungseinrichtung 8, 9, sowie der dem jeweiligen Rake-Empfänger 5, 6 zugeordneten Interferenzunterdrückungseinrichtung 10, 11 zugeführt.

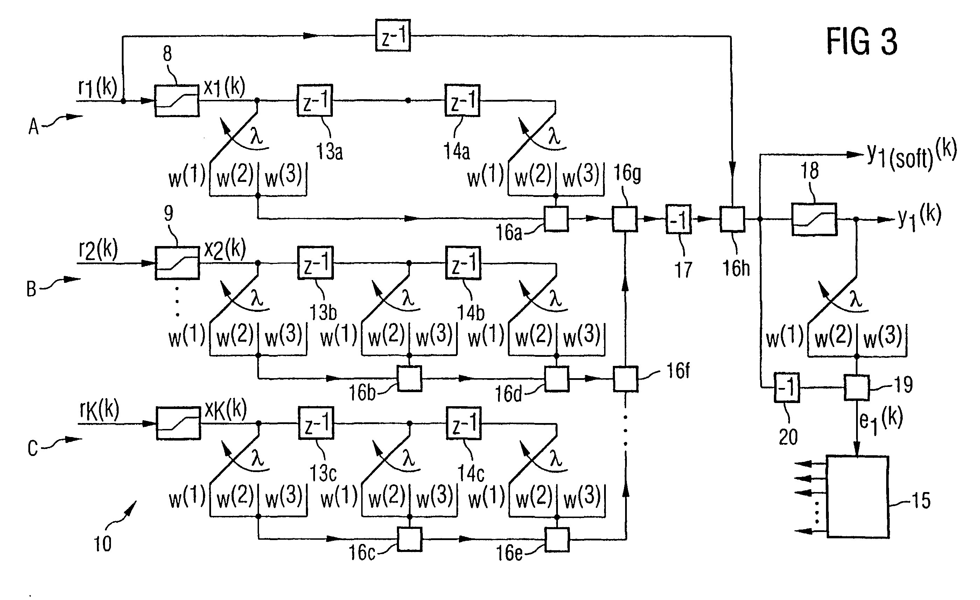

Jede Interferenzunterdrückungseinrichtung 10, 11 weist gemäß Fig. 3 eine Mehrphasenstruktur auf, wobei die Phasenzahl 1 = p/Q beträgt (hier: 3 Phasen $\lambda$ = 1, 2, 3). Die in der jeweiligen Interferenzunterdrückungseinrichtung 10, 11 verwendeten Filterkoeffizienten werden separat für jede Phase $\lambda$ aktualisiert. Beim hier gezeigten Mobilfunkübertragungssystem 1 mit K Sendeeinheiten 2, 3 kann die Struktur der Interferenzunterdrückungseinrichtung 10, 11 durch $K^2 l$ zeitabhängige Filterkoeffizientensätze $w^{(\lambda)}_{u,u'}(k)$ beschrieben werden. Jedoch wird, wie in Fig. 3 gezeigt ist, zum Filtern und zum Aktualisieren der Filterkoeffizienten zu jedem Zeitpunkt k nur eine einzelne Phase verwendet. Aus diesem Grund ist der zum Filtern und zum Aktualisieren erforderliche Rechenaufwand unabhängig von der Phasenzahl 1.

Die Filterkoeffizienten $w^{(\lambda)}_{u,u'}(k)$ werden dadurch berechnet, dass die folgende Minimier-Aufgabe gelöst wird:

$$(4) \qquad E[|r_u - \sum B_{u,u'} \, d_u|^2] = min.$$

Dabei wird von u'=1 bis u' = K aufsummiert, wobei die Filterkoeffizienten $w^{(\lambda)}_{u,u'}(k)$ Elemente der Matrix $B_{u,u'}$ darstellen. Die Minimier-Aufgabe (4) wird mit Hilfe der Methode der minimalen mittleren Fehlerquadrate ("LMS" = Least Mean Square) gelöst, wobei die Approximation durch einen momentanen Fehler

$$(5) \qquad e_u(k) = r_u - \sum B_{u,u'} d_u$$

ersetzt wird, wobei wiederum von u'=1 bis u' = K aufsummiert wird.

Die Gleichung zur Aktualisierung der Koeffizienten für die u-te Sendeeinheit 2, 3 lautet dann

$$(6) \qquad w^{(\lambda)}_{u,u'}(k+1) = \sigma w^{(\lambda)}_{u,u'}(k) + 2\mu e_u(k) d_u(k)$$

wobei u' = 1 ... K ist. Aus Stabilitätsgründen wird im vorliegenden Beispiel $\sigma$ = 0,995 gewählt.

Zur Approximation für die von den jeweiligen Sendeeinheit 2, 3 gesendeten Datenbits $d_u$ werden bei der erfindungsgemäßen Interferenzunterdrückungseinrichtung 10, 11 statt "hard bits" sog. "soft bits" verwendet. Dabei wird ein bestimmtes, im Zahlenbereich zwischen + ∞ und - ∞ liegendes Signal nicht genau entweder auf die Zahl + 1 oder auf die Zahl - 1 abgebildet, sondern auf einen zwischen den Zahlen + 1 und - 1 liegenden Zahlenbereich. Hierzu wird beim vorliegenden Ausführungsbeispiel die Tangenshyperbolikus-Funktion verwendet. Konkret werden die Werte für $x_u(k)$ gemäß der folgenden Gleichung berechnet:

$$(7) \qquad x_u(k) = \tanh(r_u(k)/2)$$

Auf Grundlage dieser approximierten Werte $x_u(k)$ wird in der jeweiligen Interferenzunterdrückungseinrichtung 10, 11 eine Interferenzunterdrückung entsprechend Gleichung (5) durchgeführt.

Dabei dient der in Fig. 3 gezeigte obere Zweig A der der ersten Sendeeinheit 2 zugeordneten Interferenzunterdrückungseinrichtung 10 zur Unterdrückung der "inter symbol interference", und die übrigen Zweige B, C zur Unterdrückung der "multi user interference".

Zunächst wird in einem ersten Schritt von den den Entscheidungseinrichtungen 8, 9 vom jeweiligen Rake-Empfänger 5, 6 zugeführten Signalen in den Entscheidungseinrichtungen 8,9 gemäß Gleichung (7) der Tangenshyperbolikus gebildet. Die erhaltenen Signale $x_1(k)$, $x_2(k)$, ... , $x_k(k)$ werden jeweils einem ersten Satz Verzögerungsglieder 13a, 13b, 13c zugeführt, und die verzögerten Signale jeweils einem zweiten Satz Verzögerungsglieder 14a, 14b, 14c. Die Signale $x_1(k)$, $x_2(k)$, ... , $x_k(k)$, die verzögerten Signale, und die zweifach verzögerten Signale werden - abhängig von der jeweils geltenden Phase $\lambda$ - mit dem von einer LMS-Koeffizientenaktualisiereinrichtung 15 gelieferten Filterkoeffizienten $w^{(\lambda)}_{u,u'}(k)$ multipliziert. Sämtliche erhaltene Signale werden in Addiergliedern 16a, b, c, d, e, f, g addiert, und dann das erhaltene Summensignal in einem Multiplizierglied 17 mit dem Faktor -1 multipliziert. Das sich ergebende Signal stellt einen Schätzwert für die insgesamt im von der ersten Sendeeinheit 2 empfangenen Signal enthaltenen Interferenzen dar ("inter symbol interference" und "multi user interference"). Dieses Signal wird in einem Addierglied 16h mit dem von dem der ersten Sendeeinheit 2 zugeordneten Rake-Empfänger 5 gelieferten Signal $r_1(k)$ addiert, und so für $r_1(k)$ ein korrigiertes Signal $y_{1(soft)}$ erzeugt. Zur Erzeugung des an die LMS-Koeffizientenaktualisiereinrichtung 15 gelieferten Fehlersignals $e_1(k)$ wird entsprechend der Gleichung (5) das korrigierte Signal $y_{1(soft)}$ einem Multiplizierglied 20 zugeführt, welches das Signal $y_{1(soft)}$ mit dem Faktor -1 multipliziert, sowie einer entsprechend den o.g. Entscheidungseinrichtungen 7, 8 aufgebauten weiteren Entscheidungseinrichtung 18. Diese bildet entsprechend wie bei der Gleichung (7) vom halbierten Signal $y_{1(soft)}$ den Tangenshyperbolikus. Das erhaltene Signal $y_1(k)$ wird - abhängig von der jeweils geltenden Phase $\lambda$ - mit dem entsprechenden von der LMS-Koeffizientenaktualisiereinrichtung 15 gelieferten Filterkoeffizienten multipliziert, und das Multiplikationssignal in einem Addierglied 19 mit dem vom Multiplizierglied 20 erhaltenen Signal addiert. Das auf diese Weise erhaltene Fehlersignal $e_1(k)$ wird der LMS-Koeffizientenaktualisiereinrichtung 15 zugeführt, die hieraus entsprechend wie oben dargestellt die aktuellen Filterkoeffizienten berechnet.

**Patentansprüche**

1. Empfangseinrichtung (4) für ein CDMA-Nachrichtenübertragungssystem (1)

   - bei der die Signale verschiedener Sendeeinheiten (2,3) jeweils mit Hilfe eines Spreizcodes gespreizt und mit Hilfe eines Pseudozufallscodes verwürfelt als Pseudozufallscode-Bitfolge an eine Empfangseinrichtung (4) gelangen und von dieser als gemeinsames Signal empfangen werden,
   - bei der die Empfangseinrichtung (4) mindestens zwei Rake-Empfänger (5,6) aufweist, denen das gemeinsame Signal jeweils zugeführt ist und jeder Rake-Empfänger (5,6) jeweils ein einer bestimmten Sendeeinheit (2,3) zugeordnetes Signal ($r_1(k)$, $r_2(k)$) herausfiltert, und
   - bei der jedem Rake-Empfänger (5,6) jeweils eine adaptive Interferenzunterdrückungseinrichtung (10,11) zugeordnet ist, die im jeweils zugeordneten herausgefilterten Signal ($r_1(k)$,$r_2(k)$) auftretende Interferenzen mit Hilfe berechneter Filterkoeffizienten unterdrückt,

   **dadurch gekennzeichnet,**

   - **dass** jedem Rake-Empfänger (5,6) für das jeweils herausgefilterte Signal ($r1(k)$,$r2(k)$ eine soft-bit-Entscheidungseinrichtung (8,9) nachgeschaltet ist, mit deren Hilfe das jeweils herausgefilterte Signal ($r_1(k)$, $r_2(k)$) auf einen Zahlenbereich abgebildet wird,
   - **dass** der Ausgang jedes Rake-Empfängers (5,6) einerseits direkt an die jeweils zugeordnete Interferenzunterdrückungseinrichtung (10,11) und andererseits über die jeweils zugeordnete soft-bit-Entscheidungseinrichtung (8,9) an alle Interferenzunterdrückungseinrichtungen (10,11) angeschaltet ist,
   - **dass** jede Interferenzunterdrückungseinrichtung (10,11) mindestens zwei Zweige (A,B) einer Mehrphasenstruktur aufweist, an die die Ausgangssignale der soft-bit-Entscheidungseinrichtungen angeschaltet sind,
   - **dass** die Mehrphasenstruktur eine momentane Phase ($\lambda$) aufweist, die durch eine Spreizcodeposition innerhalb einer Pseudozufallscode-Bitfolge des zugeordneten herausgefilterten Signals ($r1(k)$, $r2(k)$) bestimmt ist, und
   - **dass** die Filterkoeffizienten (w) zur Interferenzunterdrückung abhängig von der momentanen Phase ($\lambda$) bestimmbar sind.

2. Empfangseinrichtung (4) nach Anspruch 1, **da-**

**durch gekennzeichnet, dass** die Interferenzunterdrückungseinrichtung (10) eine Koeffizientenaktualisiereinrichtung (15) aufweist, die unter Berücksichtigung der Mehrphasenstruktur der Interferenzunterdrückungseinrichtung (10) in Abhängigkeit von der momentanen Phase ($\lambda$) die Filterkoeffizienten (w) berechnet.

3. Empfangseinrichtung (4) nach Anspruch 1 oder 2, **dadurch gekennzeichnet, dass** die "soft-bit" Entscheidungseinrichtung (9) zur Verwendung einer Tangenshyperbolikus-Funktion vorgesehen ist.

4. Empfangseinrichtung (4) nach Anspruch 2 oder 3, **dadurch gekennzeichnet, dass** die Koeffizientenaktualisierungseinrichtung (15) derart ausgestaltet ist, dass die Filterkoeffizienten (w) mit Hilfe eines Verfahrens zur Bestimmung minimaler mittlerer Fehlerquadrate berechnet werden.

5. Adaptives CDMA-Interferenzunterdrückungsverfahren für ein CDMA-Nachrichtenübertragungssystem (1)

   - bei dem Signale von verschiedenen Sendeeinheiten (2,3) jeweils mit Hilfe eines Spreizcodes gespreizt und mit Hilfe eines Pseudozufallscodes verwürfelt als Pseudozufallscode-Bitfolge übertragen und gemeinsam empfangen werden,
   - bei dem das gemeinsam empfangene Signal an mindestens zwei Rake-Empfänger (5,6) gelangt und jeder Rake-Empfänger (5,6) jeweils ein einer bestimmten Sendeeinheit (2,3) zugeordnetes Signal ($r_1$(k),$r_2$(k)) herausfiltert,
   - bei dem für jedes herausgefilterte Signal ($r_1$(k), $r_2$(k)) eine jeweils zugeordnete adaptive Interferenzunterdrückung mit Hilfe von berechneten Filterkoeffizienten durchgeführt wird,

   **dadurch gekennzeichnet,**

   - **dass** an jedem herausgefilterten Signal (r1 (k), r2 (k)) ein soft-bit-Entscheidungsverfahren angewendet wird,
   - **dass** jedes herausgefilterte Signal (r1(k), r2(k)) einerseits direkt der jeweils zugeordneten Interferenzunterdrückung und andererseits nach der soft-bit-Entscheidung jeder Interferenzunterdrückung zugeführt wird,
   - **dass** die Interferenzunterdrückung mit Hilfe einer momentanen Phase ($\lambda$) einer Mehrphasenstruktur durchgeführt wird und die momentane Phase durch eine Spreizcodeposition innerhalb einer Pseudozufallscode-Bitfolge des jeweiligen herausgefilterten Signals (r1(k),r2(k)) bestimmt wird, und
   - **dass** die Filterkoeffizienten (w) zur Interferenzunterdrückung abhängig von der momentanen Phase ($\lambda$) berechnet werden.

6. Adaptives CDMA-Interferenzunterdrückungsverfahren nach Anspruch 5, **dadurch gekennzeichnet, dass** beim soft-bit-Entscheidungsverfahren eine Tangenshyperbolikus-Funktion verwendet wird.

7. Adaptives CDMA-Interferenzunterdrückungsverfahren nach Anspruch 5 oder 6, **dadurch gekennzeichnet, dass** beim soft-bit-Entscheidungsverfahren ein Ausgabesignal $x_1$(k) unter Verwendung der Formel:

$$x_1(k) = \tanh(r_1(k)/2)$$

aus einem herausgefilterten Signal $r_1$(k) berechnet wird.

## Claims

1. Receiver device (4) for a CDMA message transmission system (1)

   - in which signals from different transmitter units (2,3) are in each case spread with the aid of a spreading code and, scrambled with the aid of a pseudo random number code, reach a receiver device (4) in the form of a pseudo random number code bit sequence where they are received as a joint signal,
   - in which the receiver device (4) has at least two rake receivers (5,6), to which the joint signal is fed in each case, and each rake receiver (5,6) filters out a signal ($r_1$(k), $r_2$(k)) associated with a particular transmitter unit (2,3) in each case, and
   - in which an adaptive interference suppression device (10,11) is associated with each rake receiver (5,6) in each case, and with the aid of calculated filter coefficients suppresses interference effects occurring in the associated filtered out signal ($r_1$(k),$r_2$(k)) in each case,

   **characterised in that**

   - a soft bit decision making device (8,9) is connected downstream of each rake receiver (5,6) for the filtered out signal ($r_1$(k),$r_2$(k)) in each case, with the aid of which soft bit decision making device (8,9) the filtered out signal ($r_1$(k),$r_2$(k)) is in each case mapped to a number range,
   - the output from each rake receiver (5,6) is connected on the one hand directly to the associated interference suppression device (10,11) in each case and on the other hand by way of the associated soft bit decision making device (8,9) in each case to all interference suppression devices (10,11),

- each interference suppression device (10,11) comprises at least two branches (A,B) of a multi-phase structure to which the output signals of the soft bit decision making devices are connected,

- the multi-phase structure exhibits an instantaneous phase ($\lambda$) which is determined by a spreading code position within a pseudo random number code bit sequence of the associated filtered out signal ($r_1(k),r_2(k)$), and

- the filter coefficients (w) for interference suppression can be determined depending on the instantaneous phase ($\lambda$).

2. Receiver device (4) according to Claim 1, **characterised in that** the interference suppression device (10) has a coefficient updating device (15) which calculates the filter coefficients (w) depending on the instantaneous phase ($\lambda$) whilst taking into consideration the multi-phase structure of the interference suppression device (10).

3. Receiver device (4) according to Claim 1 or 2, **characterised in that** the "soft-bit" decision making device (9) is provided for use of a hyperbolic tangent function.

4. Receiver device (4) according to Claim 2 or 3, **characterised in that** the coefficient updating device (15) is designed in such a way that the filter coefficients (w) are calculated using a method for determining minimum mean error squares.

5. Adaptive CDMA interference suppression method for a CDMA message transmission system (1)

- in which signals from different transmitter units (2,3) are in each case spread with the aid of a spreading code and, scrambled with the aid of a pseudo random number code, transmitted as a pseudo random number code bit sequence and received jointly,

- in which the jointly received signal reaches at least two rake receivers (5,6) and each rake receiver (5,6) filters out a signal ($r_1(k)$, $r_2(k)$) associated with a particular transmitter unit (2,3) in each case,

- in which an associated adaptive interference suppression operation is performed in each case with the aid of calculated filter coefficients for each filtered out signal ($r_1(k)r^2(k)$),

**characterised in that**

- a soft bit decision making method is applied to each filtered out signal ($r_1(k),r_2(k)$),

- each filtered out signal ($r_1(k),r_2(k)$) is fed on the one hand directly to the respective associated interference suppression device and on the other hand, following the soft bit decision, is fed to each interference suppression device,

- the interference suppression is performed with the aid of an instantaneous phase ($\lambda$) of a multi-phase structure and the instantaneous phase is determined by means of a spreading code position within a pseudo random number code bit sequence of the respective filtered out signal ($r_1(k)$, $r_2(k)$), and

- the filter coefficients (w) for interference suppression are calculated depending on the instantaneous phase ($\lambda$).

6. Adaptive CDMA interference suppression method according to Claim 5, **characterised in that** a hyperbolic tangent function is used with regard to the soft bit decision making method.

7. Adaptive CDMA interference suppression method according to Claim 5 or 6, **characterised in that** with regard to the soft bit decision making method an output signal $x_1(k)$ is calculated from a filtered out signal $r_1(k)$ by using the formula:

$$x_1(k) - \tanh(r_1(k)/2)$$

**Revendications**

1. Dispositif de réception (4) pour un système de transmission de messages CDMA (1)

- dans lequel des signaux de différentes unités émettrices (2, 3), qui sont à chaque fois étalés à l'aide d'un code d'étalement et brouillés à l'aide d'un code pseudo-aléatoire, arrivent en tant que séquence de bits de code pseudo-aléatoire au niveau d'un dispositif de réception (4) et sont reçus par celui-ci en tant que signal commun,

- dans lequel le dispositif de réception (4) présente au moins deux récepteurs Rake (5, 6) auxquels le signal commun est amené à chaque fois et chaque récepteur Rake (5, 6) filtre à chaque fois un signal ($r_1(k)$, $r_2(k)$) associé à une unité émettrice (2, 3) déterminée et

- dans lequel un dispositif d'élimination d'interférences (10, 11) adaptatif est associé à chaque fois à chaque récepteur Rake (5, 6), lequel dispositif d'élimination d'interférences élimine les interférences survenant dans le signal filtré associé respectif ($r_1(k)$, $r_2(k)$) à l'aide de coefficients de filtrage calculés,

**caractérisé**

- **en ce qu'**un dispositif de décision soft-bit (8, 9) est connecté en aval de chaque récepteur Rake (5, 6) pour le signal filtré respectif ($r_1(k)$, $r_2(k)$), à l'aide duquel le signal filtré respectif ($r_1(k)$, $r_2(k)$) fait l'objet d'une application vers une gamme de nombres,
- **en ce que** la sortie de chaque récepteur Rake (5, 6) est reliée d'une part directement au dispositif d'élimination d'interférences (10, 11) associé respectif et d'autre part à tous les dispositifs d'élimination d'interférences (10, 11) par le biais du dispositif de décision soft-bit (8, 9) associé respectif,
- **en ce que** chaque dispositif d'élimination d'interférences (10, 11) présente au moins deux branches (A, B) d'une structure à plusieurs phases à laquelle les signaux de sortie des dispositifs de décision soft-bit sont amenés,
- **en ce que** la structure à plusieurs phases présente une phase momentanée ($\lambda$) qui est déterminée par une position du code d'étalement à l'intérieur d'une séquence de bits de code pseudo-aléatoire du signal filtré associé ($r_1(k)$, $r_2(k)$) et
- **en ce que** les coefficients de filtrage (w) pour l'élimination d'interférences sont déterminables en fonction de la phase momentanée ($\lambda$).

2. Dispositif de réception (4) selon la revendication 1, **caractérisé en ce que** le dispositif d'élimination d'interférences (10) présente un dispositif d'actualisation de coefficients (15) qui calcule les coefficients de filtrage (w) en fonction de la phase momentanée ($\lambda$) en tenant compte de la structure à plusieurs phases du dispositif d'élimination d'interférences (10).

3. Dispositif de réception (4) selon la revendication 1 ou 2, **caractérisé en ce que** le dispositif de décision à « soft bit » (9) est prévu pour l'utilisation d'une fonction tangente hyperbolique.

4. Dispositif de réception (4) selon la revendication 2 ou 3, **caractérisé en ce que** le dispositif d'actualisation de coefficients (15) est exécuté de manière à ce que les coefficients de filtrage (w) soient calculés à l'aide d'un procédé de détermination des moindres carrés d'erreur moyens.

5. Procédé d'élimination d'interférences CDMA adaptatif pour un système de transmission de messages CDMA (1)

- dans lequel des signaux de différentes unités émettrices (2, 3), qui sont à chaque fois étalés à l'aide d'un code d'étalement et brouillés à l'aide d'un code pseudo-aléatoire, sont transmis en tant que séquence de bits de code pseudo-aléatoire et reçus collectivement,
- dans lequel le signal reçu collectivement arrive au niveau d'au moins deux récepteurs Rake (5, 6) et chaque récepteur Rake (5, 6) filtre à chaque fois un signal ($r_1(k)$, $r_2(k)$) associé à une unité émettrice (2, 3) déterminée,
- dans lequel, pour chaque signal filtré ($r_1(k)$, $r_2(k)$), une élimination d'interférences adaptative associée respective est exécutée à l'aide de coefficients de filtrage calculés,

**caractérisé**

- **en ce qu'**un procédé de décision soft-bit est appliqué à chaque signal filtré ($r_1(k)$, $r_2(k)$),
- **en ce que** chaque signal filtré ($r_1(k)$, $r_2(k)$) est soumis d'une part directement à l'élimination d'interférences associée respective et d'autre part à chaque élimination d'interférences après la décision soft-bit,
- **en ce que** l'élimination d'interférences est exécutée à l'aide d'une phase momentanée ($\lambda$) d'une structure à plusieurs phases et la phase momentanée est déterminée par une position du code d'étalement à l'intérieur d'une séquence de bits de code pseudo-aléatoire du signal filtré ($r_1(k)$, $r_2(k)$) respectif et
- **en ce que** les coefficients de filtrage (w) pour l'élimination d'interférences sont calculés en fonction de la phase momentanée ($\lambda$).

6. Procédé d'élimination d'interférences CDMA adaptatif selon la revendication 5, **caractérisé en ce que** l'on utilise une fonction tangente hyperbolique dans le procédé de décision soft-bit.

7. Procédé d'élimination d'interférences CDMA adaptatif selon la revendication 5 ou 6, **caractérisé en ce que**, dans le procédé de décision soft-bit, on calcule un signal de sortie $x_1(k)$ à partir d'un signal filtré $r_1(k)$ en utilisant la formule :

$$x_1(k) = \tanh(r_1(k)/2).$$

# FIG 1

# FIG 2

$r_1(k)$   $x_1(k)$

$r_2(k)$   $x_2(k)$

$r_K(k)$   $x_K(k)$

$y_{K(soft)}(k)$

$y_{2(soft)}(k)$

$y_{1(soft)}(k)$

FIG 3

EP 1 391 053 B1